# EUROPÄISCHE PATENTSCHRIFT

(11) **EP 2 862 641 B1**
(45) Veröffentlichungstag und Bekanntmachung des Hinweises auf die Patenterteilung: **11.07.2018**
(21) Anmeldenummer: 13306420.4
(22) Anmeldetag: 16.10.2013
(51) Int. Cl.: B21C 37/08, B21C 37/09

(54) **Verfahren zur Herstellung metallischer Verbundrohre**
Method for producing metallic composite pipes
Procédé de fabrication de tubes composites métalliques

(43) Veröffentlichungstag der Anmeldung: 22.04.2015
(73) Patentinhaber: Nexans, 92400 Courbevoie (FR)
(72) Erfinder: Egerer, Ralf, 38723 Seesen (DE); Schulz, Holger, 30167 Hannover (DE)
(74) Vertreter: Feray, Valérie

(56) Entgegenhaltungen:
- WO-A1-96/27475
- DE-A1- 2 432 962

## Beschreibung

Die Erfindung bezieht sich auf ein Verfahren zur Herstellung eines Rohres aus einem Band, welches aus einer Schicht eines ersten Metalls und einer Schicht eines zweiten Metalls besteht, wobei die Schichten auf der gesamten Länge des Bandes metallurgisch fest miteinander verbunden sind, mit welchem das Band längseinlaufend so zu einem Schlitzrohr geformt wird, daß seine Längskanten an einem sich in Längsrichtung erstreckenden Schlitz aneinander liegen, und mit welchem der Schlitz zur Bildung eines rundum geschlossenen Rohres verschweißt wird.

Metallische Rohre aus zwei Schichten unterschiedlicher Metalle haben vielfältige Anwendungen, insbesondere in der Kabelindustrie und für den Transport von Gasen und Flüssigkeiten. Bei derartigen Verbundrohren werden die gewünschten Eigenschaften der verwendeten Metalle vorteilhaft gleichermaßen ausgenutzt. Beispielsweise kann ein Rohr aus Gründen des Korrosionsschutzes oder zur besseren Wärmeleitung außen plattiert sein. Elektrisch leitende Kabel können aus dem preiswerten Grundmaterial Aluminium mit einer darauf plattierten, gut elektrisch leitenden Kupferschicht bestehen. Derartige CCA-Rohre (*copper-clad aluminium* für kupferkaschiertes Aluminium) eignen sich dank des Skin-Effektes besonders als Hochfrequenz-Stromleiter.

Bekannte Verfahren zur Herstellung derartiger metallischer Rohre beruhen auf galvanischen oder mechanischen Verbundtechniken.

Eine metallische Schicht kann galvanisch auf ein Metallrohr aufgetragen werden, wie es beispielsweise bei der Herstellung verzinkter Stahlrohre getan wird. Es entsteht ein unlösbarer Verbund der beiden Metallschichten. Das Galvanisieren ist ein energieintensiver Prozeß und mit relativ geringen Fertigungsgeschwindigkeiten verbunden.

Zu den mechanischen Verfahren gehört beispielsweise das Plattieren. Auf ein metallisches Flachband wird ein dünnes Flachband aus einem anderen Metall aufgewalzt. Ein so plattierter Metallstreifen kann anschließend zu einem Rohr geformt und verschweißt werden. Ein Nachteil bei diesem Verfahren besteht darin, daß im Schweißnahtbereich des Rohrs keine geschlossene, gleichmäßige äußere Schicht vorliegt, da sich die beiden Metalle während des Verschweißens vermischen. Dies hat zur Folge, daß die Materialeigenschaften des Rohrs im Schweißnahtbereich nicht kontrolliert eingestellt werden können und sich diese erheblich von denen des übrigen Rohrs unterscheiden können. Außerdem kann es durch die Vermischung zur Versprödung der Schweißnaht kommen.

Die EP 1 469486 B1, welche die Basis für den Oberbegriff des Anspruchs 1 bildet, beschreibt einen mit Kupfer beschichteten Aluminiumstreifen, welcher beispielsweise zur Herstellung koaxialer Kabel verwendet werden kann. Das kupferplattierte Band wird für eine gewünschte Anwendung so hergestellt, daß der Aluminiumstreifen etwas breiter als der Kupferstreifen ist. Beim Verschweißen des zu einem Rohr geformten Bandes wird nur das Aluminium verschweißt. Dies hat allerdings zur Folge, daß die Kupferschicht entlang der Aluminiumschweißnaht eine Lücke aufweist. Die Stromleitungseigenschaften des fertigen Kabels sind deshalb besonders im Hochfrequenzbereich beeinträchtigt. Weiterhin ist das Aluminium im Schweißnahtbereich der Korrosion ausgesetzt.

Die WO 96/27475 A1 beschreibt ein Verfahren zur Herstellung eines Rohres aus Metall, wobei zunächst ein Metallstreifen galvanisch beschichtet wird, dann Beschichtungsmaterial nahe der Kanten entfernt wird, und wonach anschließend ein Rohr geformt wird und die Kanten verschweißt werden. Das Beschichtungsmaterial hat eine niedrigere Schmelztemperatur als das beschichtete Metall. Das Metallrohr wird nach dem Schweißen erneut erwärmt, damit sich das Beschichtungsmaterial gleichmäßig über die Schweißnaht verteilt. Zusätzlich kann das Beschichtungsmaterial direkt auf die Schweißnaht aufgetragen werden.

Der Erfindung liegt die Aufgabe zugrunde, ein kontinuierliches Verfahren zur Herstellung qualitativ hochwertiger Rohre bereitzustellen, welche eine gleichmäßige, rundum geschlossene äußere Schicht und keine Materialeigenschaftsänderungen im Schweißnahtbereich gegenüber dem verbleibenden Rohr aufweisen.

Diese Aufgabe wird gemäß der Erfindung dadurch gelöst,
- daß an den beiden Längskanten des Bandes das Kupfer in über die gesamte Länge des Bandes verlaufenden Streifen vom Aluminium entfernt wird,
- daß das Band mit außen liegendem Kupfer zum Schlitzrohr geformt wird,
- daß die aneinander liegenden Kanten der Aluminiumschicht miteinander verschweißt werden, und
- daß im Bereich der Schweißnaht eine Kupferschicht auf das Aluminium zur Fertigstellung eines Rohres mit einer rundum geschlossenen Kupferschicht aufgetragen wird.

Neben den sich aus der Aufgabenstellung direkt ergebenden Vorteilen stellt die Erfindung außerdem die Vorteile bereit, daß das erfindungsgemäße Verfahren flexibel ist, große Fertigungsgeschwindigkeiten erlaubt, mit relativ geringen Fertigungskosten verbunden ist und vergleichsweise wenig Energie benötigt. Insbesondere der Schritt des Entfernens der Streifen des Kupfers hat den Vorteil, daß plattierte Metallbänder mit größerer Ausgangsbreite als für das herzustellende Rohr nötig in dem erfindungsgemäßen Verfahren zum Einsatz kommen können. Von diesen breiten Metallbändern (in der Regel als Coilware vorliegend) werden Metallbänder mit der erforderlichen Breite geschnitten, die für die gewünschte Anwendung benötigt wird. Die zugeschnittenen Bänder können dann, beispielsweise mittels einer Rollenschere, an ihren Kanten beschnitten werden, so daß es möglich ist, ein zugeschnittenes Band zur Fertigung von Rohren mit geringfügig unterschiedlichen Rohrdurchmessern zu verwenden. Das erfindungsgemäße Verfahren zur Herstellung plattierter Metallrohre ist damit flexibel und kostengünstig.

Das Verfahren gemäß der Erfindung wird anhand der Zeichnungen erläutert.

Ausführungsbeispiele des Erfindungsgegenstandes sind in den Zeichnungen dargestellt. Es zeigen:
Fig. 1 in schematischer Darstellung eine Vorrichtung zur Herstellung eines Rohres aus Metall nach einem Ausführungsbeispiel des erfindungsgemäßen Verfahrens;
Fig. 2A-2D in schematischer Darstellung jeweils einen Querschnitt des Metallbandes bzw. des Rohrs während erfindungsgemäßer Verfahrensschritte.

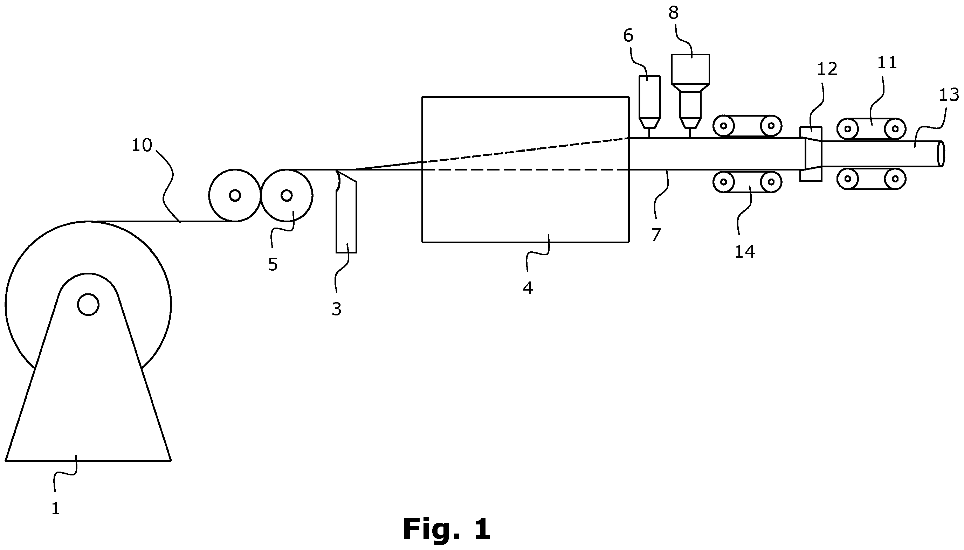

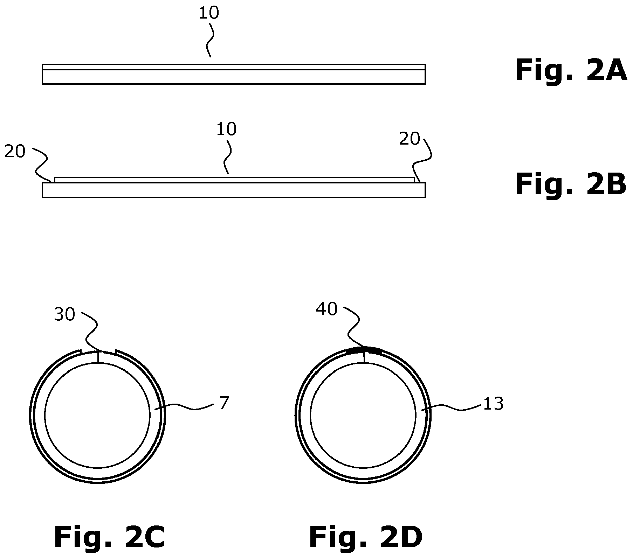

Mittels der in Fig. 1 schematisch dargestellten Vorrichtung wird ein Rohr aus Metall nach dem erfindungsgemäßen Verfahren hergestellt. Von einem Bandvorrat 1 wird ein Metallband 10 abgezogen. Das Band 10, dargestellt in Fig. 2A, besteht aus einer Kupferschicht und einer Aluminiumschicht, wobei die Schichten auf der gesamten Länge des Bandes metallurgisch fest miteinander verbunden sind. In einer Schäl- oder Fräseinrichtung 3 wird an beiden Längskanten des Bandes 10 das Kupfer in über die gesamte Länge des Bandes verlaufenden Streifen vom Aluminium entfernt. Fig. 2B zeigt schematisch das Metallband 10 mit den Stellen 20, an denen die Streifen des Kupfers entfernt worden sind. Ein bei diesem Arbeitsschritt teilweises Mitentfernen des Aluminiums hat keinen wesentlichen Einfluß auf die Qualität des fertigen Rohres.

Das Band 10 wird anschließend einer Formvorrichtung 4, z.B. einem Rollen- oder Gleitwerkzeug, zugeführt. Zwischen dem Bandvorrat 1 und der Formvorrichtung 4 kann sich eine Bandkanten- oder Rollenschere 5 befinden, mittels derer das Band 10 auf Maß geschnitten wird. Die Schere 5 kann vor oder hinter dem Schälmesser 3 angeordnet sein.

Zur Erzeugung des Rohrs wird das Band 10 anschließend in der Formvorrichtung 4 zu einem Schlitzrohr geformt, und zwar so, daß die Kupferschicht außen liegt. Gleichzeitig kann eine Kabelseele oder eine andersgeartete Füllung (nicht dargestellt) zugeführt werden, um welche das Schlitzrohr herumgeführt wird. Die in der Längsrichtung des Schlitzrohrs verlaufenden, aneinander liegenden Kanten der Aluminiumschicht werden in einer Schweißeinrichtung 6 miteinander verschweißt, um ein rundum geschlossenes Rohr 7 zu erhalten. Ein Querschnitt des verschweißten Rohres 7 mit einer Lücke 30 des Kupfers im Bereich der Schweißnaht ist in Fig. 2C veranschaulicht. Das Längsnahtschweißen ist vorzugsweise Wolfram-Inertgas- oder Laserschweißen. Im Bereich der Schweißnaht wird dann in einer zweiten Schweißeinrichtung 8 eine Kupferschicht auf das Aluminium aufgetragen, um ein Rohr mit einer rundum geschlossenen Kupferschicht zu erhalten. Ein Querschnitt des fertiggestellten Rohres 13, bei welchem die aufgetragene Schicht 40 des Kupfers die nach dem Verschweißen des Schlitzrohres verbliebene Lücke vollständig schließt, ist in Fig. 2D gezeigt. Bei dem Auftragsschweißen wird das Kupfer in Form von Pulver, Draht oder Band der Schweißstelle kontinuierlich zugeführt und das Material mittels eines Laserstrahls verschweißt. Der Oberflächenauftrag erfolgt vorzugsweise unter Schutzatmosphäre.

Wie in Fig. 1 dargestellt, kann das fertiggestellte Rohr 13 von einer Abzugsvorrichtung 11 erfaßt und durch eine vor der Abzugsvorrichtung 11 angeordneten Einrichtung 12 zur Reduzierung des Durchmessers gezogen werden. Falls das Rohr eine Seele enthält, wird beim Herunterziehen des Rohrs der Durchmesser desselben derart reduziert, daß es zur Anlage auf der Seele kommt, so daß ein eingangs vorhandener Luftspalt zwischen Rohr und Seele entfernt wird. Die durchmesserreduzierende Einrichtung 12 kann beispielsweise ein Ziehstein sein. Ebenso kann die durchmesserreduzierende Einrichtung 12 aus mindestens einem Rollengestell bestehen (z.B. einem sogenannten Türkenkopf). Das Rollengestell kann angetrieben oder nicht angetrieben sein. Bei diesem Zieh- bzw. Walzprozeß wird gleichzeitig die Oberfläche des außen liegenden Kupfers im Auftragsbereich geglättet bzw. vergleichmäßigt. Die Wandstärke des Rohrs wird bei diesem Reduktionsschritt nicht verringert.

Die Abzugsvorrichtung 11 kann beispielsweise aus einem Bandabzug oder einem Spannzangenabzug bestehen. Wie in Fig. 1 dargestellt, kann eine weitere Abzugsvorrichtung 14 vor dem Ziehstein bzw. Rollengestell 12 angeordnet sein. Die weitere Abzugsvorrichtung 14 bringt die Kraft auf, die erforderlich ist, um das Metallband 10 vom Abwickler 1 abzuwickeln und durch die eventuell vorhandene Bandkantenschere 5 und die Formvorrichtung 4 zu ziehen, sofern dieselben keinen eigenen Antrieb haben. Die Abzugsvorrichtung 11 muß dann nur die Kraft aufbringen, die zur Verformung des Rohrs 13 im Ziehstein bzw. Rollengestell 12 erforderlich ist. Weiterhin können beim Herunterziehen des Rohres eine Torsion und kleinere Vibrationen desselben auftreten. Diese Bewegungen können sich negativ auf das Schweißergebnis auswirken. Die weitere Abzugsvorrichtung 14 dient zur Entkopplung der Einflüsse des Reduzierens auf das Schweißen in den vorgelagerten Schweißeinrichtungen 6, 8.

Das fertige Metallrohr 13 kann anschließend weiteren Verarbeitungs- oder Lagereinrichtungen (nicht dargestellt), beispielsweise einem Aufwickler oder einer Schneideeinheit, zugeführt werden.

Ein Rohr, welches mit dem beschriebenen Verfahren hergestellt wird, ist das bereits erwähnte CCA-Rohr, welches aus einem Aluminiumrohr besteht, das eine äußere Kupferschicht aufweist. Solche CCA-Rohre können beispielsweise als Innenleiter und Abschirmung in Hochfrequenzkabeln oder als Abschirmung in Hochspannungskabeln dienen.

Das erfindungsgemäße Verfahren eignet sich für die Herstellung von Metallrohren mit kreisförmigem Querschnitt als auch für Rohre mit anderen Querschnitten, beispielsweise Rechteckrohre. Verbundrohre aller Art bzw. Kabelummantelungen können mit dem erfindungsgemäßen Verfahren hergestellt werden.

## Patentansprüche

1. Verfahren zur Herstellung eines Rohres (13) aus einem Band (10), welches aus einer Schicht aus Kupfer und einer Schicht aus Aluminium besteht, wobei die Schichten auf der gesamten Länge des Bandes (10) metallurgisch fest miteinander verbunden sind, mit welchem das Band (10) längseinlaufend so zu einem Schlitzrohr geformt wird, daß seine Längskanten an einem sich in Längsrichtung erstreckenden Schlitz aneinander liegen, und mit welchem der Schlitz zur Bildung eines rundum geschlossenen Rohres (7) verschweißt wird, **dadurch gekennzeichnet,**
- **daß** an den beiden Längskanten des Bandes (10) das Kupfer in über die gesamte Länge des Bandes (10) verlaufenden Streifen vom Aluminium entfernt wird,
- **daß** das Band (10) mit außen liegendem Kupfer zum Schlitzrohr geformt wird,
- **daß** die aneinander liegenden Kanten der Aluminiumschicht miteinander verschweißt werden, und
- **daß** im Bereich der Schweißnaht eine Kupferschicht (40) auf das Aluminium zur Fertigstellung eines Rohres (13) mit einer rundum geschlossenen Kupferschicht aufgetragen wird.

2. Verfahren nach Anspruch 1, **dadurch gekennzeichnet, daß** die Kupferschicht (40) im Bereich der Schweißnaht mittels Laserauftragsschweißen aufgetragen wird.

3. Verfahren nach Anspruch 1 oder 2, **dadurch gekennzeichnet, daß** die Kupferschicht (40) im Bereich der Schweißnaht unter Schutzatmosphäre aufgetragen wird.

4. Verfahren nach einem der vorangehenden Ansprüche, **dadurch gekennzeichnet, daß** das Rohr (13) in mindestens einer Reduzierstufe in seinem Durchmesser reduziert wird.

5. Verfahren nach einem der vorangehenden Ansprüche, **dadurch gekennzeichnet, daß** in das noch unverschweißte Schlitzrohr eine Seele eingeführt wird.

6. Verfahren nach Anspruch 5, **dadurch gekennzeichnet, daß** das Rohr (13) bis zur Anlage auf der Seele in mindestens einer Reduzierstufe in seinem Durchmesser reduziert wird.

7. Verfahren nach einem der vorangehenden Ansprüche, **dadurch gekennzeichnet, daß** die Bandkanten des Metallbands (10) vor der Rohrformung beschnitten werden.

8. Verfahren nach einem der vorangehenden Ansprüche, **dadurch gekennzeichnet, daß** das Rohr (13) einen runden, eckigen oder anders gearteten Querschnitt aufweist.

## Claims

1. A method for the production of a tube (13) from a band (10), which consists of a layer of copper and a layer of aluminum, wherein the layers are firmly connected to each other metallurgically on the entire length of the band (10), with which the band (10) is shaped coming in longitudinally into an open seam tube, such that its longitudinal edges abut one another at a slot extending in the longitudinal direction, and with which the slot is welded to form a tube (7) closed all around, **characterized in**
- **that** at the two longitudinal edges of the band (10) the copper is removed from the aluminum in strips extending over the entire length of the band (10),
- **that** the band (10) is shaped with externally located copper into the open seam tube,
- **that** the edges of the aluminum layer abutting one another are welded together, and
- **that** in the area of the welded seam a copper layer (40) is applied to the aluminum to finish a tube (13) with a copper layer closed all around.

2. A method according to Claim 1, **characterized in that** the copper layer (40) is applied in the area of the welded seam by means of laser build-up welding.

3. A method according to Claim 1 or 2, **characterized in that** the copper layer (40) is applied in the area of the welded seam in a protective atmosphere.

4. A method according to any one of the preceding claims, **characterized in that** the tube (13) is reduced in its diameter in at least one reducing step.

5. A method according to any one of the preceding claims, **characterized in that** a core is introduced into the still unwelded open seam tube.

6. A method according to Claim 5, **characterized in that** the tube (13) is reduced in its diameter in at least one reducing step until it contacts the core.

7. A method according to any one of the preceding claims, **characterized in that** the band edges of the metal band (10) are cut before the tube formation.

8. A method according to any one of the preceding claims, **characterized in that** the tube (13) has a round, angular or different cross section.

## Revendications

1. Procédé de fabrication d'un tube (13) à partir d'une bande (10), qui est constituée d'une couche de cuivre et d'une couche d'aluminium, les couches étant reliées fermement entre elles de manière métallurgique sur toute la longueur de la bande (10), avec lequel la bande (10) est formée longitudinalement en un tube fendu de façon à ce que ses arêtes longitudinales s'appuient l'une contre l'autre au niveau d'une fente s'étendant dans la direction longitudinale et avec lequel la fente pour la formation d'un tube fermé sur tous les côtés (7) est soudée, **caractérisé en ce que**
- au niveau des deux arêtes longitudinales de la bande (10), le cuivre est retiré de l'aluminium en lanières s'étendant sur toute la longueur de la bande (10),
- la bande (10) est formée avec le cuivre s'étendant à l'extérieur vers le tube fendu,
- les arêtes appuyées l'une contre l'autre de la couche d'aluminium sont soudées ensemble et
- au niveau du cordon de soudure, une couche de cuivre (40) est appliquée sur l'aluminium pour la fixation d'un tube (13) avec une couche de cuivre fermée sur tous les côtés.

2. Procédé selon la revendication 1, **caractérisé en ce que** la couche de cuivre (40) est appliquée au niveau du cordon de soudure au moyen d'une soudure laser.

3. Procédé selon la revendication 1 ou 2, **caractérisé en ce que** la couche de cuivre (40) est appliquée au niveau du cordon de soudure sous une atmosphère protectrice.

4. Procédé selon l'une des revendications précédentes, **caractérisé en ce que** le tube (13) présente une réduction de diamètre dans au moins un étage de réduction.

5. Procédé selon l'une des revendications précédentes, **caractérisé en ce que**, dans le tube fendu encore non soudé, une âme est introduite.

6. Procédé selon la revendication 5, **caractérisé en ce que** le tube (13) présente une réduction de diamètre jusqu'à l'appui sur l'âme dans au moins un étage de réduction.

7. Procédé selon l'une des revendications précédentes, **caractérisé en ce que** les arêtes de la bande métallique (10) est découpée avant la formation du tube.

8. Procédé selon l'une des revendications précédentes, **caractérisé en ce que** le tube (13) présente une section ronde, angulaire ou d'un autre type.
